Europäisches Patentamt

European Patent Office

Office européen des brevets

(19)

(11) Publication number: **0 341 369**

**A1**

## (12) EUROPEAN PATENT APPLICATION

(21) Application number: 88830199.1

(22) Date of filing: 09.05.88

(51) Int. Cl.4: **F16H 3/54**

(43) Date of publication of application:
**15.11.89 Bulletin 89/46**

(84) Designated Contracting States:
**CH DE ES FR GB LI SE**

(71) Applicant: **Merenda, Maurizio**
**Via Risorgimento no. 24/A**
**I-48018 Faenza RA(IT)**

(72) Inventor: **Merenda, Maurizio**
**Via Risorgimento no. 24/A**
**I-48018 Faenza RA(IT)**

(74) Representative: **Coppi, Cecilia**
**Via Oblach No. 1**
**I-40141 Bologna(IT)**

(54) **Hydraulic operation speed range selector.**

(57) The subject of the invention is a unit designed to form part of power transmissions. Fitted to the output of hydraulic transmissions, its purpose is to improve their external characteristics, and namely to enlarge the variation range of possible speeds. This range selector may be defined, from the functional and construction standpoint, as an epicyclic reduction unit speed gear 1,2,3 which also acts as a brake. Its special construction system is such that the change in speed ratio and operaton of the brake are totally hydraulically operated.

EP 0 341 369 A1

## HYDRAULIC OPERATION SPEED RANGE SELECTOR

It is known that the speed range selector is designed to be introduced as an element for improving the characteristics of power transmissions of the mechanical-hydraulic type. As is also known, an hydraulic transmission consists of a pump and an hyrdaulic motor. The pump, powered by a heat or electric motor, converts mechanical energy into hydraulic energy. This in turn is then reconverted into mechanical energy by the hydraulic motor which controls the element to be operated either directly or through a mechanical drive. Both the pump and the motor are volumetric: by adjusting the displacement of one or both of these a corresponding variation output speed is attained, without affecting the pump control speed. With this possibility, an hydraulic transmission is equivalent to a speed variator or stepless change gear.

This device therefore finds application in drive systems where the speed has to be frequently adjusted and/or changed. The drawback with the hydraulic transmission system as speed variator is that its range of variation is limited. This limitation is due to factors inherent in its components: pump and motor. Given this restriction, hydraulic transmissions are fitted in those machines where the speed variation range allowed is sufficient for their characteristics. There are other machines where hydraulic transmissions are applied, but with limitations of the following kind:
its operation leads to low performance rates;
together with a mechanical gear change.

The introduction of a mechanical gear change with various ratios placed between the hydraulic motor and final drive offers various speed ranges, each corresponding to one ratio, and therefore considerably increases the total speed variation range. By means of the neutral position, the connection between hydraulic motor and element driven is disengaged. By fitting the gear change with a parking brake, the whole transmission may be arrested when it is idle, thereby ensuring stopping even under the action of external forces or torques. The gear changes that exist for this type of use nevertheless present the following drawbacks:
- they may only be applied in specific cases, for example self-propelled machines;
- they are mechanical and present difficulties in changing gear ratios, because of the remote control;
- change in gear ratio is impossible unless the drive is completely stationary;
- if they are built as units separate from the final drive, they are cumbersome and their configuration limits their versatility for various applications.

The purpose of this invention is to create a speed range selector in the form of a compact unit of regular shape, whose versatility permits its use in a variety of applications, and whose contained size is comparable to that of the various types of hydraulic motor that may drive it.

The selector has the following characteristics: it includes
- 2 drive ratios: the first for the low speed range, the second for the high speed range;
- neutral position facility;
- acts as negative operation parking and safety brake;
- control of the gear ratio change, of neutral and of brake release is totally hydraulic. Remote control is therefore easy and change in gear ratio is possible even if the drive is not stationary.

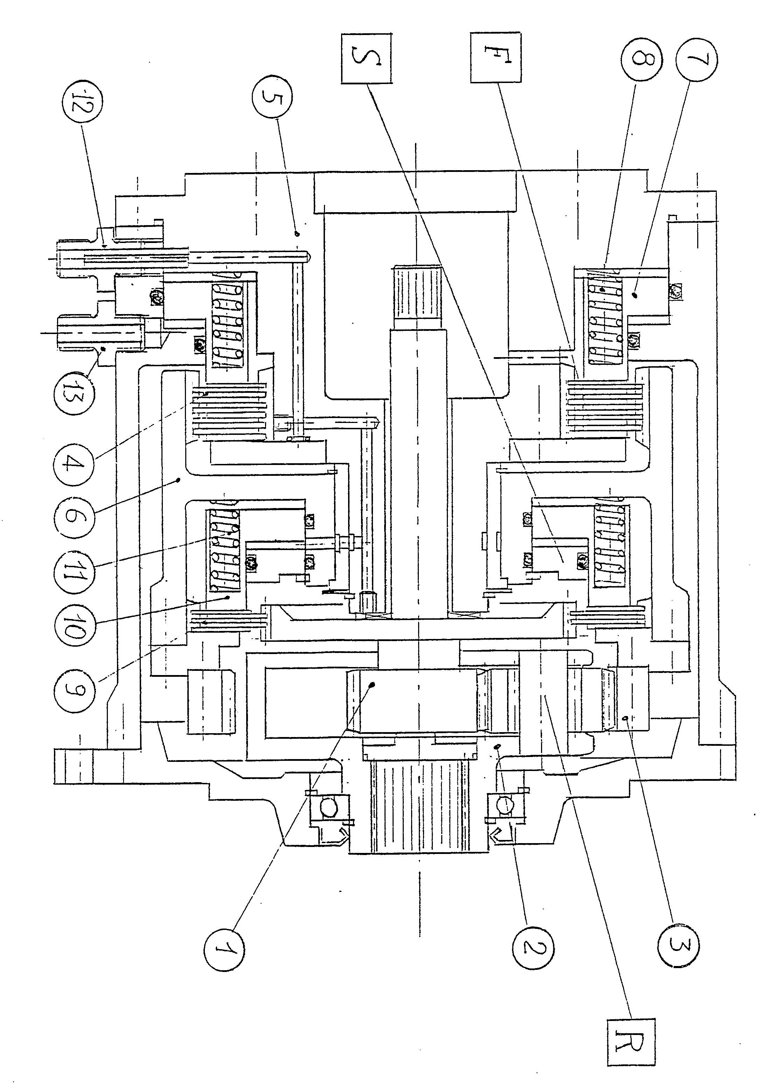

With reference to drawing no. 1 which provides a sectional view, the speed range selector consists of an epicyclic reduction gear (R), and of a brake assembly (F) and a clutch unit (S) connected to it. The epicyclic reduction gear has a solar gear (1) that receives the drive, a planetary gear holder with planetary gears (2) which transmits the output drive and a ring gear (3).

The brake assembly consists of a set of disks (4) connected respectively to the part (5), integral with the body of the range selector, and to the crown gear (3) by means of the bell (6).

The piston (7) presses the disks together by means of the springs (8).

The clutch unit comprises a set of disks (9), connected respectively to the solar gear (1) and to the ring gear (3), by means of the bell (6). The piston (10) presses the disks together under the action of the springs (11).

Operation.

By sending oil under pressure from the fitting (12), the piston (10) moves back under the action of the springs, releasing the disks and disengaging the solar gear (1) from the bell (4) and hence from the ring gear (3), while the ring gear, kept stationary by the brake (F), remains stationary and integral with the body. By turning the solar gear (1), the planetary gear holder (2) rotates at low speed, as a result of the reduction ratio achieved in the epicyclic stage. In this way the 1st or low speed range is obtained.

Conversely, removing pressure at the fitting (12) and applying pressure at the fitting (13), the brake piston (7) moves back, releasing the disks, disengaging the ring gear (3) and enabling this to rotate with the bell (4). The solar gear (1) in turn is connected to the ring gear (3) by means of the clutch (S) which is locked in position. By turning the solar gear (1), the ring gear (3) rotates with it at the same speed and consequently the planetary gear holder (2), driven by these, also rotates. In this way the 2nd or high speed range is obtained.

By sending oil under pressure in both fittings (12) and (13), both the brake (F) and the clutch (S) open and the solar gear (1) and the ring gear (3) are both released. The solar gear (1) and the planetary gear holder (2) can thus rotate at independent speeds. In this way the neutral position is achieved.

By removing the pressure at both the above-mentioned fittings (12) and (13), both the brake (F) and the clutch (S) are locked under the action of the respective springs (4) and (8) and in this way no rotation is permitted, since this is prevented by the friction of the brake and clutch disks which are both pressed down. In this way the range selector acts as a parking or safety brake.

It should be understood that this invention, illustrated and described here by way of example, may be extended to all those accessory variants which, as such, come within the scope of said invention.

## Claims

1. Hydraulic operation speed range selector characterised by the fact that it is composed of a cylindrical body containing an epicyclic reduction gear continually in drive, a multiple disk clutch which engages with said reduction gear, and a multiple disk brake which engages with said reduction gear, the brake and clutch being hydraulically operated.

2. Speed range selector, as described in claim 1, characterized by the fact that the clutch and brake are both negatively operated.

3. Speed range selector, as described in claims 1 and 2, characterized by the fact that it is situated between the main motor and the final drive by means of a mechanical coupling.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | US-A-4 026 167 (ACHER)<br>* Abstract; figures * | 1,2 | F 16 H 3/54 |
| X | DE-A-2 754 967 (TRW INC.)<br>* Pages 13-15; figures 1,2 * | 1,2,3 | |

TECHNICAL FIELDS
SEARCHED (Int. Cl.4)

F 16 H

The present search report has been drawn up for all claims

| Place of search | Date of completion of the search | Examiner |
|---|---|---|
| THE HAGUE | 09-01-1989 | BEERNAERT J.E. |

EPO FORM 1503 03.82 (P0401)